# EUROPEAN PATENT SPECIFICATION

(11) **EP 2 239 466 B1**
(45) Date of publication and mention of the grant of the patent: **06.03.2019**
(21) Application number: 10250035.2
(22) Date of filing: 11.01.2010
(51) Int. Cl.: F04D 13/08, F04D 29/40, F04D 29/70

(54) **Pond pump units**
Teichpumpeneinheiten
Unités de pompage pour étang

(30) Priority: 31.03.2009 GB 0905580
(43) Date of publication of application: 13.10.2010
(73) Proprietor: Exel Industries S.A., 51200 Epernay (FR)
(72) Inventor: Walters, George Leigh, Nottingham, NG10 4JL (GB)
(74) Representative: Faulkner, Thomas John

(56) References cited:
- EP-A2- 1 908 961
- GB-A- 2 249 136
- US-A- 5 004 535
- US-A1- 2007 183 905
- US-B1- 6 423 218

## Description

This invention relates to pond pump units which can be used, for example, in a garden pond for pumping water in order that the water is, for example, fed to a fountain or drawn through or fed to a filter.

With existing pond pump units there is a concern that excessive amounts of packaging are used for transport and/or sale. Furthermore, in some cases there can be limitations on the types of uses to which any one unit can be put.

It would be desirable to alleviate one or more of these problems so as to allow more efficient manufacturing and less waste of packaging material.

US2007/183905 A1 describes a pond pump comprising a housing and an intake connector, wherein the intake connector is moveable such that the suction volume can be varied. US5004535 A describes a reverse osmosis water purification system comprising a support structure and arranged to facilitate manual transportation. EP1908961 A2 describes a pump comprising a housing, a pump device and a suction connection that opens out in two separate suction channels.

According to one aspect of the present invention there is provided a pond pump unit suitable to be disposed in a body of water and comprising a pump for pumping pond water, a container within which the pump is housable in use and a plurality of moveable auxiliary parts which are connected to, or connectable to: a) the pump, when housed in the container, and/or b) the container; the moveable auxiliary parts being moveable between one or more storage locations provided within the container and operative positions in which the moveable auxiliary parts are connected to: a) the pump, when housed in the container, and/or b) the container; such that the pump unit has a storage configuration in which each of the plurality of moveable auxiliary parts is housed within the container and an operational configuration in which each of the plurality of moveable auxiliary parts is in a respective operative position.

The container can thus act both as an operative part of the pond pump unit when the unit is in use and as a storage container when the unit is not in use.

The plurality of moveable auxiliary parts may be housed wholly within the container when the pond pump unit is in the storage configuration.

The pump unit can be considered to have a storage configuration envelope, that is, a boundary defined by all of the outermost portions of the pump unit, when the pump unit is in the storage configuration.

At least one of the moveable auxiliary parts, when in its operative position, may be disposed outside of the container, and/or project outside of the storage configuration envelope of the pump unit.

At least one of the moveable auxiliary parts may be stored within the container without being attached thereto and may be removable as a completely independent part from the container. Such a part may then be connected to the container and/or pump for use.

It will, of course, be appreciated that the container may also be used to house other parts that may be used with the pump unit without being connected directly or indirectly to the unit.

The container may comprise two parts which are moveable relative to one another between a closed position and an open position which allows access to the interior of the container to be obtained. The two parts of the container may be hingedly connected to one another.

The container may be a cage which is arranged as a mechanical filter capable of filtering at least some of the water drawn into the pump unit in use.

The pond pump unit may comprise a handle. The handle may be formed integrally with the container.

The moveable auxiliary parts may comprise any one of, or any combination of: a power cable; outlet accessories - for example, an outlet hose connector; inlet accessories - for example, an inlet hose connector; a ball joint connector; fountain accessories; and a removable filter.

The outlet accessories typically will be arranged for connection (directly, or indirectly) to an outlet of the pump. The inlet accessories typically will be arranged for connection (directly, or indirectly) to an inlet of the pump.

The removable filter may be a clip in filter. The removable filter may, for example, be a push fit with, a sliding fit with, or just loosely contained within a container. The removable filter may be a wildlife protection filter. Where the container is a cage the removable filter may be a finer filter than at least a portion of the mechanical filter formed by the cage.

The removable filter may be arranged for location adjacent said portion of the mechanical filter formed by the cage, when the unit is in use.

The unit may be arranged to be operated selectively in one of at least two different orientations. The unit thus may be arranged to be stable if stood on one of at least two distinct faces of the container. In one orientation an outlet of the pump unit may be opposite a face of the container on which the unit is stood. This can facilitate use of the pump unit as a fountain pump. In another orientation the outlet of the pump unit may be adjacent a face of the container on which the unit is stood. This can facilitate use of the pump unit as a filter pump.

The pump may be removable from the container. This can allow the container to be used as a filter unit with a remote pump. In such a case the remote pump may be the pump of the pump unit. In such a case, in use, the pump may be disposed in a body of water in which the container resides or outside of that body of water.

According to another aspect of the invention there is provided a pond filtering system comprising a pond pump unit as defined above wherein the pump is disposed outside of the container and connected thereto by hose, the container operates as a filter and the pump is arranged to draw water from the container, or deliver water to the container, via the hose.

According to another aspect of the present invention there is provided a packaged product comprising point of sale packaging and a pond pump unit as defined above wherein the pond pump unit is in its storage configuration and the point of sale packaging comprises a sleeve within which the pond pump unit is disposed.

The point of sale packaging may consist only of said sleeve. The point of sale packaging may consist of only said sleeve plus shrink wrapping.

Where the pond pump unit comprises a handle the handle may be usable as a handle even when the unit is disposed in the point of sale packaging.

The present invention will now be described, by way of example only, with reference to the accompanying drawings in which:
Figure 1 schematically shows a pond pump unit embodying the present invention in an operational configuration;
Figure 2A shows the pond pump unit of Figure 1 with a cage of the pond pump unit open;
Figure 2B shows the pond pump unit of Figure 1 with the cage open and a removable filter removed;
Figure 3 shows the pond pump unit of Figure 1 whilst internal components of the pond pump unit (besides the removable filter) are in storage locations and the cage of the unit is open;
Figure 4 shows the pond pump unit of Figure 1 in a storage configuration and separately shows a point of sale packaging sleeve in which the pond pump unit is arranged to be disposed; and
Figure 5 shows the pond pump unit of Figure 1 disposed within the point of sale sleeve shown in Figure 4 so as to form a packaged product.

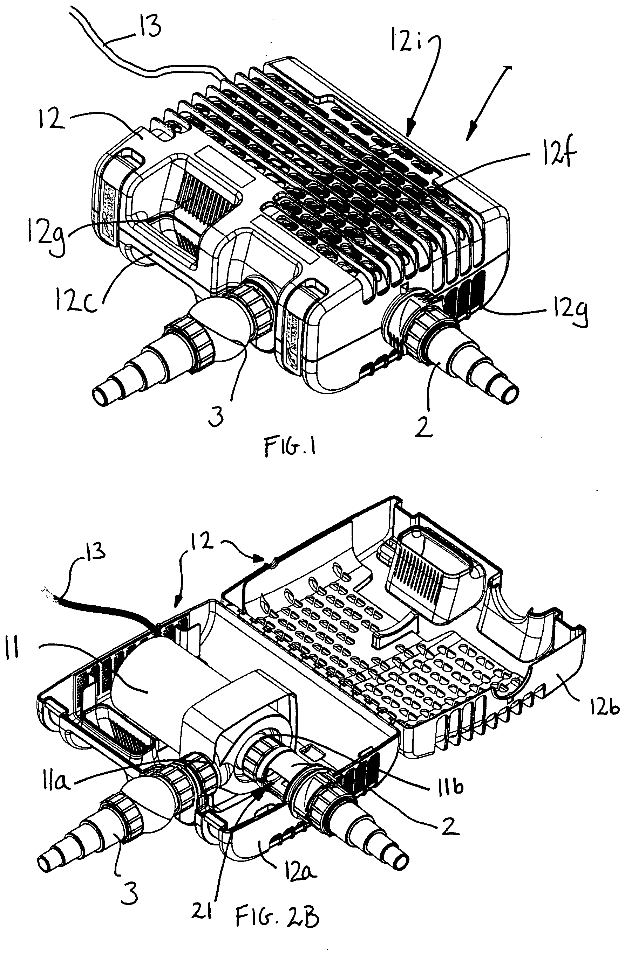

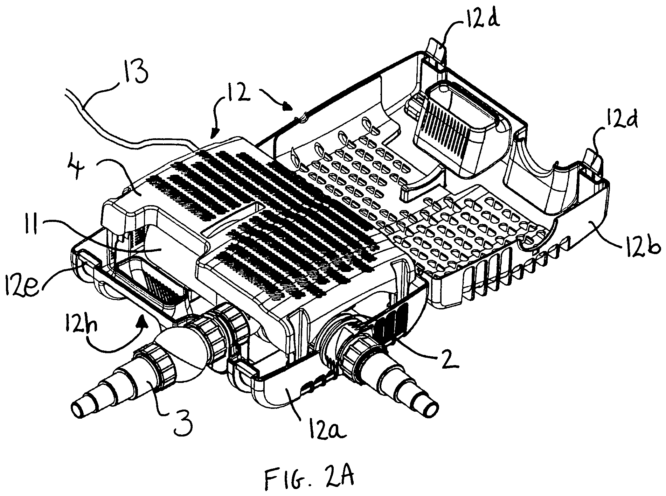

Figures 1, 2A and 2B show a pond pump unit 1. The pond pump unit 1 comprises a pump 11 and a containing cage 12 which is shown in a closed and operative position in Figure 1 and in an open position in Figures 2A and 2B. Attached to the pump 11 is a power supply lead 13. Inlet accessories 2 and outlet accessories 3 are also connected to the pump 11 when it is in the operational configuration as shown in Figure 1. The inlet accessories 2 are connected to an inlet 11b of the pump and the outlet accessories 3 are connected to an outlet 11a of the pump (see Figure 2B). The accessories 2, 3 are arranged to allow a length of hose or tubing to be connected thereto, to carry water towards and away from the pump unit from, for example, another filter unit or a remote intake site and to, for example, a fountain or another remote outlet site. These inlet and outlet accessories 2, 3 are also shown connected to the pump 11 in Figure 2 where the cage 12 is open.

A removable wildlife protection mechanical filter 4 is provided in the pond pump unit 1 and sits in the cage 12 when the pond pump unit is in the operational configuration. This wildlife protection filter 4 cannot be seen in Figure 1 but is shown in position in Figure 2A where the cage 12 is open. On the other hand the wildlife protection filter 4 is omitted from Figure 2B to allow the other internal components of the unit to be more clearly seen.

The containing cage 12 has two parts 12a, 12b, which are hingedly mounted to one another to allow the cage to move between the closed position shown in Figure 1 and the open position shown in Figures 2A and 2B. The two cage parts 12a, 12b, include appropriately moulded parts so that when the cage 12 is in the closed position shown in Figure 1, an integral handle 12c is provided. Referring to Figure 2A, one part of the cage 12b comprises clips 12d which are arranged to engage with respective engaging portions 12e of the other part 12a of the cage to releasably hold the cage 12 in the closed position shown in Figure 1.

The inlet accessory 2 mounted on the pump 11 includes an aperture 21 which provides a fluid flow path from the interior of the cage 12 into the inlet 11b of the pump 11. There is, of course, also a fluid flow path through the inlet accessory 2 into the inlet 11b of the pump 11.

The cage 12 acts as a mechanical filter for filtering water drawn into the interior of the cage 12 and towards the aperture 21 by the pump 11 during operation. The cage 12 is provided with a plurality of apertures through which water can be drawn. In the present embodiment these apertures are provided in one side face 12f (behind which is located the removable filter 4 when the unit is in its operative configuration and the user chooses to include the filter 4) and three end faces 12g of the cage 12. This leaves one side face 12h (what can be termed the bottom of the unit) unapertured and one edge face 12i (what can be termed the back of the unit) unapertured. Whilst these faces 12h, 12i, are generally indicated in Figures 1 and 2, they cannot be clearly seen as they are facing downwards and away from the viewer with the unit 1 in the orientation shown in Figures 1 and 2.

These two faces 12h, 12i, are useful for standing the pump unit on during operation. The pump unit 1 has two distinct stable orientations. One is the orientation shown in Figures 1 and 2, where the unapertured side face 12h is being used as the face in contact with the ground and the other is an orientation where the unapertured edge face 12i is used as the surface to contact the ground. It is not essential but it is desirable for these surfaces 12h, 12i upon which the unit may be stood in use to be unapertured.

With the unit 1 in the orientation shown in Figures 1 and 2, it is, for example, suitable for use as a filter pump. In the alternative orientation where the unit is stood on the unapertured end face 12i, it is suitable for use, for example, as a fountain pump as the outlet 11a and outlet accessories 3 then point upwards.

The removable filter 4 offers a finer mechanical filter than that provided by the cage 12. It is an optional component which can be used, for example, where it is desired to try to prevent small waterborne pond life from being sucked into the pump unit 1 through the apertured side wall of 12h of the cage 12.

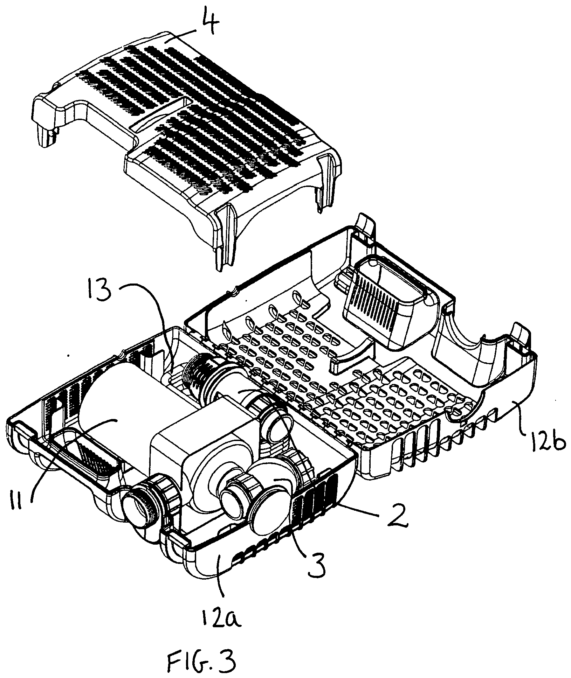

Figure 3 shows the pump unit shown in Figures 1 and 2 with the cage 12 open and the power lead 13, inlet accessories 3 and outlet accessories 2 disposed in storage locations within the cage 12. In Figure 3 the removable filter 4 is shown separately from the cage to help illustrate this feature but this component also has a storage location provided within the cage which, in this embodiment, corresponds to its operative position as shown in Figure 2A.

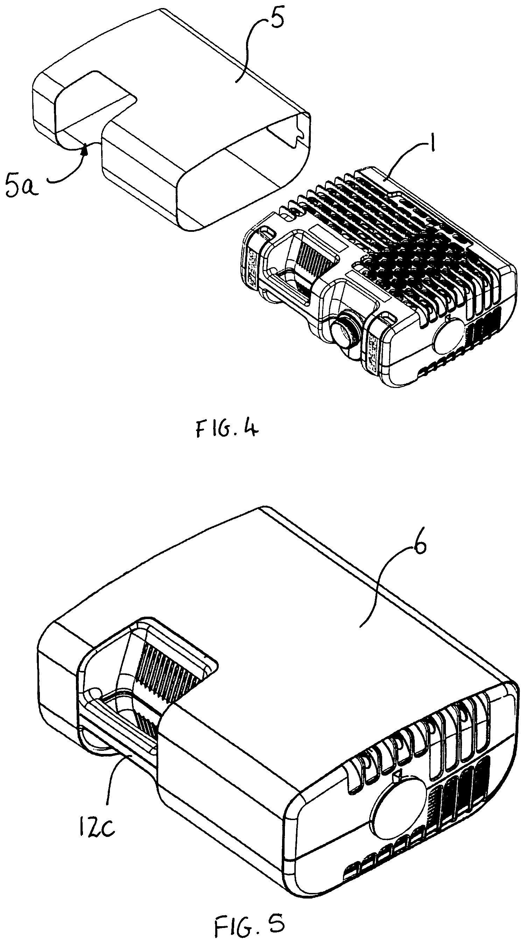

Thus, it will be seen that all of the moveable auxiliary parts of the pump unit 1 can be housed within the cage 12 which allows the pump unit 1 to adopt a storage configuration as shown in Figure 4, ie the same configuration shown as Figure 3 but with the removable filter 4 in position and the cage closed. This means that all of the parts required to set up and operate the pump unit 1 are provided within the cage 12 in the storage configuration which allows the pump unit 1 to be stored for sale or otherwise in a particularly compact and robust form where the cage 12 acts as a container or housing for all of the parts required in operation of the pump unit 1.

When the pump unit 1 is in the storage configuration as shown in Figure 4, the inlet and outlet accessories 2, 3 and power lead 13, are neatly housed within the cage 12 and do not project outside of it. When the pump unit 1 is in its operational configuration the inlet and outlet accessories 2, 3 and power lead 13, do project outside of the cage 12 and outside of the storage configuration envelope of the pump unit 1.

As well as showing the pump unit 1 in a storage configuration, Figure 4 also shows a packaging sleeve 5 which is arranged to be slid over the pump unit 1 whilst in its storage configuration to provide a packaged product 6 as shown in Figure 5. It will be noted that the point of sale packaging 5 thus consists only of a sleeve which wraps around the pump unit 1 when in its storage configuration. It will be appreciated of course that the provision of such a sleeve is optional as the cage itself 12 is doing the job of containing and safely storing all of the component parts of the pump unit 1. Optionally, the unit may be (heat) shrink wrapped either over the sleeve, under the sleeve, or without the sleeve at all.

This arrangement avoids the need for separate packaging such as a cardboard box which would normally be used to house a pump unit of the current type with the moveable auxiliary parts of the pump unit being stored within the box and not within the cage 1 as in the present arrangement.

The sleeve 5 has a cut out 5a which allows the handle 12c of the cage 12 to be used even when the sleeve is in place to form the packaged product 6.

In the present embodiment the pump 11 is removable mounted in the cage 12. This means that the user can choose to remove the pump from the cage 12 and use the cage 12 as a filter unit. A remote pump, which may be the pump 11 of the pump unit 1 may then be connected to the cage by suitable hose to form a filtering system. In fact several such filter units made up using the present type of cage 12, might be used in one filtering system for a large pond. The remote pump might be disposed in the pond or outside of the pond in any such system.

## Claims

1. A pond pump unit (1) suitable to be disposed in a body of water and comprising a pump (11) for pumping pond water, a container (12) within which the pump (11) is housable in use and a plurality of moveable auxiliary parts (2,3) which are connected to, or connectable to:
a) the pump (11), when housed in the container (12),
and/or
b) the container (12);
the moveable auxiliary parts (2,3) being moveable between one or more storage locations provided within the container (12) and operative positions in which the moveable auxiliary parts (2,3) are connected to:
a) the pump (11), when housed in the container (12),
and/or
b) the container (12);
such that the pump unit (1) has a storage configuration in which each of the plurality of moveable auxiliary parts (2,3) is housed within the container (12) and an operational configuration in which each of the plurality of moveable auxiliary parts (2,3) is in a respective operative position.

2. A pond pump unit (1) according to claim 1, in which the container (12) is a cage which is arranged as a mechanical filter capable of filtering at least some of the water drawn into the pump unit (1) in use.

3. A pond pump unit (1) according to claim 2, which comprises a removable filter (4) which is a finer filter than at least a portion of the mechanical filter formed by the cage.

4. A pond pump unit (1) according to any one of claims 1 to 3, in which the plurality of moveable auxiliary parts (2,3) is housed wholly within the container (12) when the pond pump unit (1) is in the storage configuration.

5. A pond pump unit (1) according to any preceding claim, in which at least one of the moveable auxiliary parts (2,3), when in its operative position, is disposed outside of the container (12), and/or projects outside of the storage configuration envelope of the pump unit (1) that is, a boundary defined by all of the outermost portions of the pump unit, when the pump unit is in the storage configuration.

6. A pond pump unit (1) according to any preceding claim, which is arranged to be operated in the operative position selectively in one of at least two different orientations, in one of said orientations an outlet (3) of the pump unit (1) being opposite a face of the container (12) on which the unit (1) is stood and in another of said orientations the outlet (3) of the pump unit (1) being adjacent a face of the container (12) on which the unit (1) is stood.

7. A pond pump unit (1) according to any preceding claim, which comprises a handle (12c) which is formed integrally with the container (12).

8. A pond pump unit (1) according to any preceding claim in which the container (12) comprises two parts (12a,12b) which are moveable relative to one another between a closed position and an open position which allows access to the interior of the container (12) to be obtained.

9. A pond pump unit (1) according to any preceding claim in which the pump (11) is removable from the container (12).

10. A packaged product comprising point of sale packaging (5) and a pond pump unit (1) according to any preceding claim, wherein the pond pump unit (1) is in its storage configuration and the point of sale packaging (5) comprises a sleeve within which the pond pump unit (1) is disposed.

11. A packaged product according to claim 10, in which the pond pump unit (1) comprises a handle (12c) which is usable as a handle whether or not the unit (1) is disposed in the point of sale packaging (5).

12. A pond filtering system comprising a pond pump unit (1) according to claim 9, wherein the pump (11) is disposed outside of the container (12) and connected thereto by hose, the container (12) operates as a filter and the pump (11) is arranged to draw water from the container (12), or deliver water to the container (12), via the hose.

## Patentansprüche

1. Teichpumpeneinheit (1), die dazu geeignet ist, in einem Gewässer angeordnet zu werden und Folgendes umfasst: eine Pumpe (11) zum Pumpen von Teichwasser, einen Behälter (12), in dem die Pumpe (11) in Gebrauch aufgenommen werden kann, und eine Vielzahl bewegbarer Hilfsteile (2, 3), die mit Folgendem verbunden sind oder damit verbunden werden können:
a) der Pumpe (11), wenn sie in dem Behälter (12) aufgenommen ist,
und/oder
b) dem Behälter (12);
wobei die bewegbaren Hilfsteile (2, 3) zwischen einem oder mehreren in dem Behälter (12) vorgesehenen Aufbewahrungsorten und betriebsfähigen Stellungen, in denen die bewegbaren Hilfsteile (2, 3) mit Folgendem verbunden sind, bewegbar sind:
a) der Pumpe (11), wenn sie in dem Behälter (12) aufgenommen ist,
und/oder
b) dem Behälter (12);
sodass die Pumpeneinheit (1) eine Aufbewahrungskonfiguration, in der jedes der Vielzahl von bewegbaren Hilfsteilen (2, 3) in dem Behälter (12) aufgenommen ist, und eine betriebsbereite Konfiguration, in der sich jedes der Vielzahl von bewegbaren Hilfsteilen (2, 3) in einer jeweiligen betriebsfähigen Stellung befindet, aufweist.

2. Teichpumpeneinheit (1) nach Anspruch 1, wobei es sich bei dem Behälter (12) um einen Käfig handelt, der als mechanischer Filter eingerichtet ist, der in der Lage ist, mindestens einen Teil des in Gebrauch in die Pumpeneinheit (1) gesaugten Wassers zu filtern.

3. Teichpumpeneinheit (1) nach Anspruch 2, die einen herausnehmbaren Filter (4) umfasst, bei dem es sich um einen Filter handelt, der feiner als mindestens ein Abschnitt des von dem Käfig gebildeten mechanischen Filters ist.

4. Teichpumpeneinheit (1) nach einem der Ansprüche 1 bis 3, wobei die Vielzahl von bewegbaren Hilfsteilen (2, 3) ganz in dem Behälter (12) aufgenommen ist, wenn sich die Teichpumpeneinheit (1) in der Aufbewahrungskonfiguration befindet.

5. Teichpumpeneinheit (1) nach einem der vorangehenden Ansprüche, wobei mindestens eines der bewegbaren Hilfsteile (2, 3), wenn es sich in seiner betriebsfähigen Stellung befindet, außerhalb des Behälters (12) angeordnet ist und/oder außerhalb der Aufbewahrungskonfigurations-Hüllkurve der Pumpeneinheit (1), das heißt, einer von allen äußersten Abschnitten der Pumpeneinheit definierten Umgrenzung, wenn sich die Pumpeneinheit in der Aufbewahrungskonfiguration befindet, vorsteht.

6. Teichpumpeneinheit (1) nach einem der vorangehenden Ansprüche, die dazu eingerichtet ist, in der betriebsfähigen Stellung selektiv in einer von mindestens zwei verschiedenen Orientierungen betrieben zu werden, wobei in einer der Orientierungen ein Auslass (3) der Pumpeneinheit (1) einer Seite des Behälters (12), auf der die Einheit (1) steht, gegenüberliegt, und in einer anderen der Orientierungen der Auslass (3) der Pumpeneinheit (1) einer Seite des Behälters (12), auf der die Einheit (1) steht, benachbart ist.

7. Teichpumpeneinheit (1) nach einem der vorangehenden Ansprüche, die einen Griff (12c) umfasst, der einstückig mit dem Behälter (12) ausgebildet ist.

8. Teichpumpeneinheit (1) nach einem der vorangehenden Ansprüche, wobei der Behälter (12) zwei Teile (12a, 12b) umfasst, die zwischen einer geschlossenen Stellung und einer offenen Stellung, die ermöglicht, dass Zugang zu dem Inneren des Behälters (12) erhalten wird, relativ zueinander bewegbar sind.

9. Teichpumpeneinheit (1) nach einem der vorangehenden Ansprüche, wobei die Pumpe (11) aus dem Behälter (12) herausnehmbar ist.

10. Verpacktes Produkt, umfassend Verkaufsstellenverpackung (5) und eine Teichpumpeneinheit (1) nach einem der vorangehenden Ansprüche, wobei sich die Teichpumpeneinheit (1) in ihrer Aufbewahrungskonfiguration befindet und die Verkaufsstellenverpackung (5) eine Hülle umfasst, in der die Teichpumpeneinheit (1) angeordnet ist.

11. Verpacktes Produkt nach Anspruch 10, wobei die Teichpumpeneinheit (1) einen Griff (12c) umfasst, der ungeachtet dessen, ob die Einheit (1) in der Verkaufsstellenverpackung (5) angeordnet ist oder nicht, als Griff verwendbar ist.

12. Teichfiltrierungssystem, umfassend eine Teichpumpeneinheit (1) nach Anspruch 9, wobei die Pumpe (11) außerhalb des Behälters (12) angeordnet ist und mittels eines Schlauchs damit verbunden ist, wobei der Behälter (12) als Filter arbeitet und die Pumpe (11) dazu eingerichtet ist, über den Schlauch Wasser aus dem Behälter (12) zu saugen oder dem Behälter (12) Wasser zuzuführen.

## Revendications

1. Unité de pompage pour étang (1) adaptée à être disposée dans un plan d'eau et comprenant une pompe (11) pour pomper l'eau d'un étang, un contenant (12) à l'intérieur duquel la pompe (11) peut être reçue lors de l'utilisation et une pluralité de parties auxiliaires mobiles (2, 3) qui sont raccordées à, ou peuvent être raccordées à :
a) la pompe (11), lorsqu'elle est reçue dans le contenant (12),
et/ou
b) le contenant (12) ;
les parties auxiliaires mobiles (2, 3) étant mobiles entre un ou plusieurs emplacements de stockage disposés à l'intérieur du contenant (12) et des positions fonctionnelles dans lesquelles les parties auxiliaires mobiles (2, 3) sont raccordées à :
a) la pompe (11), lorsqu'elle est reçue dans le contenant (12),
et/ou
b) le contenant (12) ;
de sorte que l'unité de pompage (1) comprend une configuration de stockage dans laquelle chacune de la pluralité de parties auxiliaires mobiles (2, 3) est reçue à l'intérieur du contenant (12) et une configuration fonctionnelle dans laquelle chacune de la pluralité de parties auxiliaires mobiles (2, 3) est dans une position fonctionnelle respective.

2. Unité de pompage pour étang (1) selon la revendication 1, dans laquelle le contenant (12) est une cage qui est agencée comme un filtre mécanique capable de filtrer au moins une partie de l'eau attirée dans l'unité de pompage (1) lors de l'utilisation.

3. Unité de pompage pour étang (1) selon la revendication 2, qui comprend un filtre amovible (4) qui est un filtre plus fin qu'au moins une partie du filtre mécanique formé par la cage.

4. Unité de pompage pour étang (1) selon l'une quelconque des revendications 1 à 3, dans laquelle la pluralité de parties auxiliaires mobiles (2, 3) est entièrement reçue à l'intérieur du contenant (12) lorsque l'unité de pompage pour étang (1) est dans la configuration de stockage.

5. Unité de pompage pour étang (1) selon une quelconque revendication précédente, dans laquelle au moins l'une des parties auxiliaires mobiles (2, 3), dans sa position fonctionnelle, est disposée à l'extérieur du contenant (12), et/ou fait saillie à l'extérieur de l'enveloppe de configuration de stockage de l'unité de pompage (1) qui est une limite définie par toutes les parties les plus externes de l'unité de pompage, lorsque l'unité de pompage est dans la configuration de stockage.

6. Unité de pompage pour étang (1) selon une quelconque revendication précédente, qui est agencée pour être actionnée dans la position fonctionnelle sélectivement dans l'une d'au moins deux orientations différentes, dans l'une desdites orientations une sortie (3) de l'unité de pompage (1) étant opposée à une face du contenant (12) sur laquelle l'unité (1) est debout et dans une autre desdites orientations la sortie (3) de l'unité de pompage (1) étant adjacente à une face du contenant (12) sur laquelle l'unité (1) est debout.

7. Unité de pompage pour étang (1) selon une quelconque revendication précédente, qui comprend une poignée (12c) qui est formée d'un seul tenant avec le contenant (12).

8. Unité de pompage pour étang (1) selon une quelconque revendication précédente dans laquelle le contenant (12) comprend deux parties (12a, 12b) qui sont mobiles l'une par rapport à l'autre entre une position fermée et une position ouverte qui permet l'accès à l'intérieur du contenant (12).

9. Unité de pompage pour étang (1) selon une quelconque revendication précédente dans laquelle la pompe (11) est amovible par rapport au contenant (12).

10. Produit emballé comprenant un emballage de point de vente (5) et une unité de pompage pour étang (1) selon une quelconque revendication précédente, dans lequel l'unité de pompage pour étang (1) est dans sa configuration de stockage et l'emballage de point de vente (5) comprend un manchon à l'intérieur duquel l'unité de pompage pour étang (1) est disposée.

11. Produit emballé selon la revendication 10, dans lequel l'unité de pompage pour étang (1) comprend une poignée (12c) qui peut être utilisée comme une poignée que l'unité (1) soit disposée ou non dans l'emballage de point de vente (5).

12. Système de filtration pour étang comprenant une unité de pompage pour étang (1) selon la revendication 9, dans lequel la pompe (11) est disposée à l'extérieur du contenant (12) et raccordée à celui-ci par un tuyau, le contenant (12) fonctionne comme un filtre et la pompe (11) est agencée pour attirer de l'eau à partir du contenant (12), ou distribuer de l'eau au contenant (12), via le tuyau.
